(19) **Europäisches Patentamt**

**European Patent Office**

**Office européen des brevets**

(11) Veröffentlichungsnummer: **0 172 548**
**B1**

(12) **EUROPÄISCHE PATENTSCHRIFT**

(45) Veröffentlichungstag der Patentschrift:
**07.01.88**

(21) Anmeldenummer: **85110338.2**

(22) Anmeldetag: **19.08.85**

(51) Int. Cl.⁴: **B 29 C 47/12,** B 29 C 47/92

(54) **Austrittsdüse.**

(30) Priorität: **25.08.84 DE 3431274**

(43) Veröffentlichungstag der Anmeldung:
**26.02.86 Patentblatt 86/9**

(45) Bekanntmachung des Hinweises auf die Patenterteilung:
**07.01.88 Patentblatt 88/1**

(84) Benannte Vertragsstaaten:
**AT CH FR GB IT LI NL SE**

(56) Entgegenhaltungen:
**CH - A - 80 932**
**DE - A - 2 622 011**
**DE - B - 1 629 747**
**GB - A - 8 640**
**US - A - 4 102 958**

(73) Patentinhaber: **BUSS AG, Lautengartenstrasse 7,
CH-4052 Basel (CH)**

(72) Erfinder: **Chevroulet, Léon, Auf Käppelimatt 19,
CH-4133 Pratteln (CH)**
Erfinder: **Salmon, Guy, Sonnenweg 23, CH-4133 Pratteln
(CH)**

(74) Vertreter: **Rottmann, Richard, Rottmann Patentanwälte
AG Dufourstrasse 101, CH-8034 Zürich (CH)**

**Beschreibung**

Die vorliegende Erfindung bezieht sich auf eine Austrittsdüse für eine kontinuierlich arbeitende Austragmaschine, insbesondere für eine Misch- und Kneteinrichtung oder einen Extruder, mit einem geteilten Gehäuse, das einen Gehäuseunterteil und einen Gehäuseoberteil aufweist, welch letzterer um eine horizontale Achse nach oben aufklappbar ausgebildet ist.

Beim Betrieb von kontinuierlich arbeitenden Misch- und Kneteinrichtungen und Extrudern ist es erforderlich, die Betriebsbedingungen der Einrichtung konstant zu halten und das Produkt stets gleichmässig zu erzeugen. Änderungen in der Materialzufuhr oder Zusammensetzung oder der Druck- und Temperaturverhältnisse beeinflussen die Eigenschaften des Knetgutes. Die Druckverhältnisse im Gehäuse sind durch den zur Verfügung stehenden Austrittsquerschnitt am Austritt der Düse bestimmt. Zur Änderung der Druckverhältnisse sind bereits Düsen bekanntgeworden, welche bewegliche Klappen verwenden, deren Verstellung meistens manuell durch das Bedienungspersonal erfolgt. Durch die Änderung des Austrittsquerschnittes am Ende der Düse kann die Formgebung der fertig verarbeiteten Masse beeinflusst werden. Die bereits bekannten motorisch verstellbaren Austrittsdüsen haben den Nachteil, dass sie über die Betriebszustände, die in der Austrittsdüse resp. im Extruder, resp, in der Misch- und Kneteinrichtung herrschen, nicht vollautomatisch reguliert werden und im Betrieb in bezug auf Reinigung und Wartung unterschiedlich sind und daher einer intensiveren Überwachung bedürfen. So ist aus der zur Bildung des Oberbegriffs des Anspruchs 1 herangezogenen DE-B-1 629 747 ein aufklappbarer Spritzkopf für eine Strangpresse bekanntgeworden. Das Patent behandelt jedoch ausschliesslich den Vorgang beim Reinigen des Spritzkopfes, wobei die Spritzleiste ausgewechselt wird. Gemäss der gezeigten Lösung wird der Betätigungsantrieb für einen Spannkeil zum maschinellen Aufklappen und Schliessen des bewegbaren Oberteils ausgenutzt. In dieser Weise werden die inneren Teile der Düse, zwecks Reinigung derselben, zugänglich gemacht.

Zweck der Erfindung ist demgegenüber eine Austrittsdüse für eine kontinuierlich arbeitende Austragmaschine, insbesondere für eine Misch- und Kneteinrichtung oder für einen Extruder vorzuschlagen, welche in einfacher Weise ermöglicht, dass bei Überschreiten eines gegebenen Grenzwertes im Düsengehäuse z.B. beim Überschreiten eines vorbestimmten Druckes oder einer vorbestimmten Temperatur das in der Düse zu verformende Material entlastet wird. Die erfindungsgemässe Austrittsdüse eingangs beschriebener Art weist zu diesem Zwecke die im unabhängigen Anspruch 1 aufgeführten Merkmale auf. In dieser Weise wird eine Durchsatzsteigerung in der Düse ermöglicht, was zu erhöhter Wirtschaftlichkeit führt und die Möglichkeit gibt, das Austragsprodukt automatisch dauernd zu überwachen.

Die vorgeschlagene Düse kann in Verbindung mit einem Extruder gebraucht werden, welcher über einen Fallschacht einer Misch- und Kneteinrichtung nachgeschaltet ist, wobei der Extruder in bervorzugter Weise mindestens zwei parallel zueinander angeordnete Extruderwellen aufweist, so dass gleichzeitig eine grössere Anzahl parallele Stränge gebildet werden können. Eine solche, aus einer kontinuierlichen Misch- und Kneteinrichtung, einem Fallschacht und einem Extruder mit Austrittsdüse versehene Einrichtung, ist besonders geeignet zur kontinuierlichen Aufbereitung von Elektrodenmaterial, wobei die in der Misch- und Knetvorrichtung gemischte und geknetete Masse im Extruder weiter bearbeitet, zu Strängen extrudiert und schliesslich zu Briketts verformt werden. Die brikettierte Masse gelangt dann direkt in die kontinuierlichen Anoden der Söderbergelektrolyseöfen.

Es sei aber betont, dass die vorgeschlagene Austrittsdüse auch in Verbindung mit anderen Misch- und Kneteinrichtungen oder mit Extrudern gebraucht werden kann, welche zur Verarbeitung von temperatur- oder druckempfindlichen Massen sich eignen, wobei eine unzulässige Druck- oder Temperaturerhöhung zuverlässig verhindert werden kann.

Weitere besondere Ausführungsarten der Erfindung ergeben sich aus den abhängigen Ansprüchen.

Ein Ausführungsbeispiel der vorgeschlagenen Düse ist auf beiliegender Zeichnung im Vertikalschnitt dargestellt.

Die gesamthaft mit 1 bezeichnete Austrittsdüse ist an eine nur schematisch strichpunktiert gezeichnete Misch- und Kneteinrichtung oder an einen Extruder 2 angeschlossen, in welchem z.B. vier Extruderwellen parallel nebeneinander in der horizontalen Mittelebene des Extrudergehäuses angeordnet sind. Die an das Gehäuse des Extruders 2 angeflanschte Austrittsdüse ist im Vertikallängsschnitt keilförmig ausgebildet und besteht aus einem Gehäuseunterteil 3 und aus einem Gehäuseoberteil 4, welcher schräg zum horizontalen Gehäuseunterteil 3 verläuft und mit diesem, gemäss der dargestellten Ausführung einen Winkel von ca. 45° einschliesst. Dieser Winkel könnte 30° bis 75° betragen. Sowohl der Gehäuseunterteil 3 als auch der Gehäuseoberteil 4 ist doppelwandig ausgebildet, wobei zwischen der inneren und äusseren Wandung miteinander kommunizierende Hohlräume bzw. Kanäle 5 und 6 zur Aufnahme eines Heiz- oder Kühlmediums vorhanden sind. Der Zulauf des Heiz- oder Kühlmediums erfolgt über eine Leitung 7, während zum Rücklauf eine Leitung 8 dient, welche Leitungen in üblicher Weise mit Hilfe einer Pumpe gespiesen werden. Es ist oft zweckmässig, die Austrittsdüse 1 abschnittsweise verschieden zu temperieren. Zu diesem Zwecke werden die Hohlräume in separate Abschnitte mit eigenem Zirkulationssystem unterteilt, in welchen dann verschiedene temperierte Heiz- oder Kühlmedien in getrennten Kreisläufen zirkulieren.

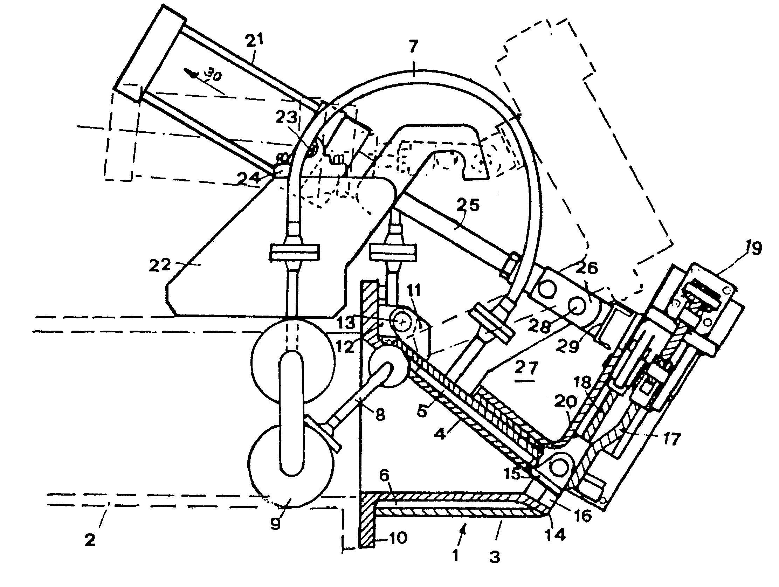

Der Gehäuseunterteil 3 ist direkt am Flansch 10 der Düse angeordnet bzw. er besteht aus einem Teil mit dem Flansch, während der Gehäuseoberteil 4 mit Hilfe eines Halters 11 an einem seitlich abstehenden Arm 12 des Flansches 10 schwenkbar befestigt ist. Eine horizontale Schwenkachse 13 erstreckt sich in entsprechenden Bohrungen des Halters 11 und des Armes 12. In der dargestellten normalen Austragsstellung der Düse 1 begrenzen die unteren und oberen Düsenlippen 14 und 15 eine längliche schlitzartige Austrittsöffnung 16, in welcher Formgebungselemente wirken und entweder am Gehäuseoberteil 4 oder am Unterteil 5 angegossen oder mit diesen Teilen verschraubt sind. Diese an und für sich bekannte und in der Zeichnung nicht näher dargestellten Formgebungselemente bilden Formkanäle, die je nach gewünschter Strangform im Querschnitt viereckig, rund oder oval ausgebildet sein können. Die Anordnung ist jetzt so getroffen, dass entweder ein Teil der Kanäle oder alle Kanäle miteinander verschliessbar sind. Zum Verschliessen sind ein Schieber 17 und ein Schieber 18 vorhanden, welche wahlweise oder gemeinsam zum Einsatz gebracht werden können. Der Schieber 17 ist mit einem Verschlusskamm versehen, welcher ein Teil der Strangöffnungen verschliessen kann. Der Schieber 18 ist ebenfalls mit einem Verschlusskamm versehen, welcher diejenigen Öffnungen verschliesst, welche durch den Verschlusskamm des Schiebers 17 nicht erfasst werden. Die Betätigung der Schieber 17 und 18 erfolgt pneumatisch mit Hilfe einer zwei Zylinder aufweisenden Steuerung 19, wobei die Schieber 17, 18 samt Steuerung 19 an einer Halteplatte 20 Aufnahme finden.

Zum Öffnen der Austrittsdüse wird der Düsenoberteil 4 zusammen mit der Halteplatte 20 und der Steuerung 19 sowie mit den Schiebern 17 und 18 aus der dargestellten Lage im Gegenuhrzeigersinn um die Schwenkachse 13 geschwenkt.

Zum Schwenken dient ein Druckluftzylinder 21, welcher in einem Joch 22 um eine Achse 23 drehbar befestigt ist. Dieses Joch ist auf der Misch- und Kneteinrichtung 2 aufgebracht und nimmt in einem Lager 24 die Schwenkachse 23 auf, um welche der Druckluftzylinder 21 schwenkbar befestigt ist. Im Druckluftzylinder 21 ist ein nicht ersichtlicher Kolben vorhanden, dessen Kolbenstange 25 am dem Zylinder abgekehrten Ende eine gabelförmige Halterung 26 besitzt, welche zwischen zwei die Halteplatte 20 umfassenden Wänden 27 drehbar festgemacht ist.

Das Drehgelenk besteht aus einer horizontalen Drehachse 28, die in einem Lager 29 zwischen den beiden Wänden 27 festgehalten ist.

Durch die Betätigung des Druckluftzylinders 21 wird dessen Kolben in der Pfeilrichtung 30 zurückgezogen, wodurch die Kolbenstange 25 die gleiche Bewegung erfährt. Dies bewirkt eine Schwenkung des Düsenoberteils 4 um die Schwenkachse 13 im Gegenuhrzeigersinn, wobei gleichzeitig sowohl der Druckluftzylinder 21 als auch die Schieber 17 und 18 samt Steuerung 19 und Führung die gestrichelt gezeichnete Endlage einnehmen werden und in einer mechanischen Arretierung 9 einrasten. In dieser Stellung ist die Austrittsdüse offen.

Die Betätigung des Druckluftzylinders 21 erfolgt über ein Steuerorgan (nicht dargestellt), welches z.B. mit einem Druckmessgerät in der Misch- und Kneteinrichtung oder in der Düse in Verbindung steht. Falls ein vorgewählter Maximaldruck überschritten wird, so bewirkt das Steuerorgan die Betätigung des Druckluftzylinders, worauf der Düsenoberteil 4 aufgeklappt wird. Eine andere Möglichkeit besteht darin, dass in der Misch- und Kneteinrichtung oder im Extruder oder in der Austrittsdüse 1 die Temperatur, insbesondere die Temperatur des zu bearbeitenden Materials, gemessen wird und beim Überschreiten einer Höchsttemperatur der Druckluftzylinder 21 zum Aufklappen der Austrittsdüse 1 betätigt wird. Eine weitere Möglichkeit besteht darin, indem das Drehmoment an den Extruderwellen gemessen wird und wiederum beim Überschreiten eines höchst zulässigen Drehmomentes das Aufklappen der Austrittsdüse bewirkt wird. Es kann ferner gleichzeitig eine Alarmvorrichtung betätigt werden, welche anzeigt, dass die Düse offen ist.

Bei der beschriebenen Einrichtung erfolgt die Formgebung nicht mehr in der Misch- und Kneteinrichtung, sondern örtlich getrennt im Extruder, wobei gleichzeitig eine grössere Anzahl kleinere Stränge hergestellt werden können. Das Profil kann ebenfalls beliebig gewählt werden.

Durch das Öffnen der Austrittsdüse 1 erfolgt sofort ein Druckabfall auch im vorgeschalteten Extruder bzw. in der Misch- und Kneteinrichtung. Gleichzeitig kann auch der Antriebsmotor des Extruders bzw. der Misch- und Kneteinrichtung durch die gleiche Steuerung beeinflusst werden.

Es sei noch erwähnt, dass die Düse den erwünschten Eigenschaften des zu bearbeitenden Materials entsprechend, temperiert werden kann, so dass ein vorzeitiges Auskühlen bzw. Verfestigen von Materialien wirksam verhindert werden kann.

Die pneumatische Steuerung 19 mit zwei Zylindern erlaubt die Betätigung der beiden Schieber 17 und 18 gemeinsam oder separat und ermöglicht einen vollautomatischen Betrieb mit Fernsteuerung.

**Patentansprüche**

1. Austrittsdüse (1) für eine kontinuierlich arbeitende Austragmaschine (2), insbesondere für eine Misch- und Kneteinrichtung oder einen Extruder, mit einem geteilten Gehäuse, das einen Gehäuseunterteil (3) und einen Gehäuseoberteil (4) aufweist, welche letzterer um eine horizontale Achse (13) nach oben aufklappbar ausgebildet ist, dadurch gekennzeichnet, dass mit dem Gehäuseoberteil (4) ein mit einem Messgerät versehenes Steuer- und Betätigungsorgan (21) in Verbindung steht, welches bei Überschreiten eines vorbestimmten Druck-, Temperatur-, Drehmoment- oder dergleichen Grenzwertes eine Verschwenkung des Gehäuseoberteils (4) zur Öffnung der Düse (1) bewirkt.

2. Austrittsdüse nach Anspruch 1, dadurch gekennzeichnet, dass dieselbe (1) im Vertikallängsschnitt keilförmig ausgebildet ist, eine von Düsenlippen (14, 15) begrenzte schlitzartige Austrittsöffnung (16) besitzt, in welcher durch Formgebungselemente gebildete, verschliessbare Kanäle vorhanden sind.

3. Austrittsdüse nach den Ansprüchen 1 und 2, dadurch gekennzeichnet, dass der Düsenaustrittsöffnung (16) Verschlussschieber (17, 18) zugeordnet sind, welche mit Hilfe einer Steuerung (19) einzeln oder gemeinsam betätigbar sind.

4. Austrittsdüse nach den Ansprüchen 1 bis 3, dadurch gekennzeichnet, dass jeder Schieber (17, 18) mit einem Verschlusskamm versehen ist, die in der Einsatzstellung der Schieber gemeinsam sämtliche Austrittskanäle der Austrittsöffnung (16) verschliessen.

5. Austrittsdüse nach den Ansprüchen 1 bis 4, dadurch gekennzeichnet, dass die Steuerung (19) pneumatisch betätigbare Steuerzylinder aufweist, wobei jedem Schieber (17, 18) ein Steuerzylinder zugeordnet ist.

6. Austrittsdüse nach den Ansprüchen 1 bis 5, dadurch gekennzeichnet, dass die Steuerung (19) zur Betätigung der Schieber (17, 18) auf einer Halteplatte (20) angeordnet und mittels dieser mit dem Gehäuseoberteil (4) der Austrittsdüse verbunden ist.

7. Austrittsdüse nach Anspruch 1, dadurch gekennzeichnet, dass zum Öffnen des Gehäuseoberteils (4) ein Druckluftzylinder (21) in einem Joch (22) um eine Achse (23) drehbar befestigt und mittels einer Kolbenstange (25) mit dem Gehäuseoberteil (4) verbunden ist.

8. Austrittsdüse nach Anspruch 1, dadurch gekennzeichnet, dass der Gehäuseunterteil (3) und der Gehäuseoberteil (4) doppelwandig ausgebildet und zwischen der inneren und äusseren Wandung Hohlräume zur Aufnahme eines Heiz- und/oder Kühlmediums vorhanden sind.

## Claims

1. Outlet nozzle (1) for a continuously operating discharge machine (2), in particular for a mixing and kneading device or an extruder, with a divided housing, which comprises a lower part of the housing (3) and an upper part of the housing (4), the latter being constructed to swing upwards about a horizontal pivot (13), characterised in that connected to the upper part of the housing (4) is a control and actuating member (2) provided with a measuring apparatus, which when a pre-determined pressure, temperature, torque or similar limit value is exceeded, brings about tilting of the upper part of the housing (4) in order to open the nozzle (1).

2. Outlet nozzle according to Claim 1, characterised in that the nozzle (11) is constructed to be wedge-shaped in vertical longitudinal section, comprises a slot-like outlet opening (16) defined by nozzle lips (14, 15), in which opening channels are provided which can be closed off and are formed by shaping members.

3. Outlet nozzle according to Claims 1 and 2, characterised in that associated with the nozzle outlet opening (16) are shutters (17, 18), which can be actuated individually or jointly by means of a control device (19).

4. Outlet nozzle according to Claims 1 to 3, characterised in that each shutter (17, 18) is provided with a closing comb, which in the position of use of the shutters jointly close off all the outlet channels of the outlet opening (16).

5. Outlet nozzle according to Claims 1 to 4, characterised in that the control device (19) comprises pneumatically actuated control cylinders, a control cylinder being associated with each shutter (17, 18).

6. Outlet nozzle according to Claims 1 to 5, characterised in that the control device (19) for actuating the shutters (17, 18) is located on a retaining plate (20) and is connected by means of the latter to the upper part (4) of the housing of the outlet nozzle.

7. Outlet nozzle according to Claim 1, characterised in that for opening the upper part (4) of the housing, a compressed air cylinder (21) is attached to rotate about a pivot (23) in a yoke (22) and is connected to the upper part (4) of the housing by means of a piston rod (25).

8. Outlet nozzle according to Claim 1, characterised in that the lower part (3) of the housing and the upper part (4) of the housing are constructed with double walls and provided between the inner and outer walls are cavities for receiving a heating and/or cooling medium.

## Revendications

1. Buse de sortie (1) pour une machine de production (2) travaillant en continu, en particulier pour un dispositif de mélange et de pétrissage, ou une extrudeuse, avec un carter subdivisé, qui présente une partie intérieure de carter (3) et une partie supérieure de carter (4), cette dernière étant configurée de manière rabattable vers le haut, autour d'un axe horizontal (13), caractérisée en ce qu'un organe de commande et d'actionnement (21), pourvu d'un appareil de mesure, est relié avec la partie supérieure de carter et provoque un basculement de la partie supérieure de carter (4), pour ouvrier la buse (1), en cas de dépassement d'une valeur prédéterminée de pression, température, couple de rotation, ou similaire.

2. Buse de sortie selon la revendication 1, caractérisée en ce que cette même buse (1) est conformée en coin, dans sa section verticale longitudinale, en ce qu'elle possède une ouverture de sortie (16) en forme de fente, limitée par des lèvres de buse (14, 15), dans lesquelles existent des canaux obturables, formés par des éléments de moulage.

3. Buse de sortie selon les revendications 1 et 2, caractérisée en ce que des disques d'obturation (17, 18) sont adjoints à l'ouverture de sortie de buse (16) et sont actionnables indépendamment, ou bien ensemble, à l'aide d'une commande (19).

4. Buse de sortie selon les revendications 1 à 3, caractérisée en ce que chaque disque (17, 18) possède un peigne d'obturation, qui obture ensemble tous les canaux de sortie de l'ouverture de sortie (16), dans la position de travail du registre.

5. Buse de sortie selon les revendications 1 à 4, caractérisée en ce que la commande (19) est pourvue de cylindres de commande actionnables pneumatiquement, un cylindre de commande étant adjoint à chaque disque (17, 18).

6. Buse de sortie selon les revendications 1 à 5, caractérisée en ce que la commande (19) d'actionnement des disques (17, 18) est disposée sur une plaque support (20) et liée au moyen de celle-ci à la partie supérieure de carter (4) de la buse de sortie.

7. Buse de sortie selon la revendication 1, caractérisée en ce que pour ouvrir la partie supérieure de carter (4), un cylindre à air comprimé (21) est fixé de manière tournante autour d'un axe (23), dans un bâti (22) et est relié à la partie supérieure de carter (4), au moyen d'une tige de piston (25).

8. Buse de sortie selon la revendication 1, caractérisée en ce que la partie inférieure de carter (3) et la partie supérieure de carter (4) sont conformées en double paroi et en ce que des espaces creux existent entre la paroi intérieure et extérieure, pour recevoir un fluide de chauffage et/ou de refroidissement.